# EUROPEAN PATENT SPECIFICATION

(11) **EP 1 334 663 B1**
(45) Date of publication and mention of the grant of the patent: **20.07.2005**
(21) Application number: 03002561.3
(22) Date of filing: 06.02.2003
(51) Int. Cl.: A23C 9/154, A23C 9/137, A23L 1/0522

(54) **Method for the stabilization of acidified milk beverages**
Verfahren zur Stabilierung sauerer Milchgetränke
Méthode de stabilisation de boissons lactées acidifiées

(30) Priority: 06.02.2002 US 354802 P; 06.02.2002 US 354566 P
(43) Date of publication of application: 13.08.2003
(73) Proprietor: INDOPCO, INC., Bridgewater, New Jersey 08807-3300 (US); MATSUTANI CHEMICAL INDUSTRY CO., LTD., Itami City, Hyogo 664-8508 (JP)
(72) Inventor: Trksak, Ralph M., Manville, New Jersey 08835 (US); Foss, Jeffrey W., Erlanger, Kentucky 41018 (US); Tsubomoto, Hozumi, Takarazuka-City, 665-0034 Hyogo (US); Fudaba, Hiroaki, Minoh-City, 562-0011 Osaka (US)
(74) Representative: Held, Stephan, Dipl.-Chem. Dr.rer.nat.

(56) References cited:
- WO-A-01/96405
- WO-A-97/00620
- RU-C- 2 183 407
- US-A- 4 590 077
- US-A- 5 759 581
- US-A- 6 093 439
- US-B1- 6 235 320

## Description

The present invention relates to a method of preparing a stabilizing syrup for use in acidified milk beverages.

Non-starch polysaccharides ("gums") such as pectin, carboxymethyl cellulose or soybean polysaccharides traditionally have been used in acidified milk beverages, particularly drinking yogurts, to prevent the precipitation of milk proteins, a phenomenon also know as "wheying-off".

The milk protein (casein) has a roughly spherical sub-micelle aggregate structure held together by hydrophobic bonds and salt bridges. These sub-micelles, which are sterically stabilized by κ-casein "hairs", destabilize and begin to coagulate at a pH of less than about 5.2. Destabilization is maximized at a pH of about 4,6, the isoelectric point of casein, which is a pH typical of fermented milk beverages, including drinking yogurts. A gum, such as high methoxy pectin, is traditionally added to such beverages in order to stabilize the beverage and prevent precipitation of the proteins. It is thought that the pectin adsorbs to the surface of the casein aggregates, probably by electrostatic attraction and acts as a dispersing agent, preventing coagulation by virtue of the adsorbed casein/pectin particle's electronic and/or steric properties.

Such gums are expensive ingredients, especially relative to starch. Replacement of gum is therefore desirable in order to reduce the cost of the yogurt. However, the removal or reduction of gums negatively impacts the stability of the beverage as well as other organoleptic and structural properties. Consumers demand that food products in which at least a portion of the gum has been removed retain the quality of the corresponding conventional products. Previous attempts to stabilize drinking yogurts with starch have indicated that starch must be added at levels that caused undesirable thickening/viscosity as well as unacceptable mouthfeel and taste.

RU-C-2 183 407 discloses a modified com starch used in cultured milk products, these being free of gums. US-A-4 590 077 discloses acidified milk beverages which are thickened with starch. WO 01 96405 A disdoses acidic milk beverages which are stabilized by pectin. US-A-6 093 439 reveals stabilizers and their uses to stabilize milk products, including yoghurts and sour cream.

Accordingly, there is an ongoing need to replace the more expensive components of acidified milk beverages such as gums, as well as to provide stability while maintaining acceptable organoleptic and structural properties.

The present invention is directed to a process for preparing stabilizing syrup including the steps of mixing starch such as waxy starches including hydroxypropylated and succinylated types, starch acetates and starch phosphates, sugar and water and then cooking the mixture to give a fully dispersed mixture. Stabilizing syrups prepared via this process are taught by the present invention. The invention is also directed to a process for preparing acidified milk beverages wherein the stabilizing syrup is blended with milk product solids, and the acidified milk beverages prepared thereby.

These and other objects of the present invention will become apparent to one skilled in the art from the following detailed description and examples below.

As previously noted, the present invention is directed to a method of preparing a stabilizing syrup for use in acidified milk beverages comprising the steps of mixing starch, sugar and water components together, cooking the mixed components to give a dispersed stabilizing syrup, and blending the stabilizing syrup with milk product solids.

All starches and flours (hereinafter "starch") may be suitable for use herein. Cold temperature stable starches are particularly suitable. As defined herein, a cold temperature stable starch is a starch which can be formulated in 1% w/w amount in a milk beverage having a pH of less of between 3.9 to about 4.6, a solids content of less than 20%, and a viscosity increase of less than 300 mPas (centipoise ("cP")), particularly less than 200 mPas (cP), and more particularly less than 100 mPas (cP), wherein the viscosity is measured at 50 RPM at 4 °C over two weeks time.

Starches suitable for use herein may be derived from a native starch or flour. As used herein a native starch or flour is one as it is found in nature. Also suitable are starches and flours derived from a plant obtained by standard breeding techniques including crossbreeding, translocation, inversion, transformation or any other method of gene or chromosome engineering to include variations thereof. In addition, waxy starch or flours derived from a plant grown from artificial mutations and variations of the above generic composition, which may be produced by known standard methods of mutation breeding, are also suitable herein.

Typical sources for the starches and flours are cereals, tubers, roots, legumes and fruits. The native source can be corn, pea, potato, sweet potato, banana, barley, wheat, rice, sago, amaranth, tapioca, arrowroot, canna, sorghum, and waxy or high amylose varieties thereof. As used herein, the term "waxy" is intended to include a starch or flour containing at least 95% by weight amylopectin and the term "high amylose" is intended to include a starch or flour containing at least 40% by weight amylose. Low amylose and waxy starches are particularly suitable for use in the present application, with waxy starches bering preferred. The term "starch" as used herein is intended to specify single starches as well as blends of the suitable starches described herein.

Suitable starches for use herein also include chemically modified starches, *i*.*e*., starch derivatives. Suitable modified derivatives include, without limitation, starch esters and ethers such as starch acetate and starch succinate. Such modified derivatives particularly suited in the present application include starch acetate derivatives treated with up to 10% w/w reagent on the starch, and preferably with up to 4% w/w reagent. Such modified derivatives particularly suited in the present application also include starch hydroxyalkylates, particularly hydroxypropylated starch treated with up to 25% w/w propylene oxide on starch, and preferably up to 10% w/w propylene oxide. The preparation and properties of such starches are known and described in the art in, for example, R. L. Whistler, J.N. BeMiller, and E. F. Paschall, Starch Chemistry and Technology, 2^{nd} Ed., Academic Press, Inc., London, Chpt. 9, Sect 5, pp. 343-349 (1984), and R. L Whistler and J. R. Daniel, *Carbohydrates*, Food Chemistry, 2^{nd} Ed., O. R. Fenenma Ed., Marcel Dekker, Inc., New York, Chpt. 3, p. 119 (1985).

One skilled in the art will recognize that degraded starches are useful in the present invention. However, non-degraded starches are preferred in that a lesser amount of non-degraded starch is required in the beverage than degraded starch. Further, degraded starches tend to negatively affect other characteristics of the beverage, such as taste, versus non-degraded starches.

A particularly useful process for the preparation of the phosphorylated starches is described in co-pending U.S. Serial No. 09/633,832, filed August 7, 2000. The process includes impregnating the desired starch with a phosphate reagent, and optionally, an oligosaccharide. From its fluidized state, the impregnated starch is then dried to a virtually anhydrous state, preferably one percent by weight of the starch or less, and heat-treated to effect phosphorylation. The impregnation of the starch by oligosaccharide and phosphate reagent may be done in any order. The pH of the resultant slurry can then be adjusted to between 3 and 12, preferably between 6 and 9.5.

"Phosphate reagent" as used herein includes any phosphate reagent used for phosphorylating starch, such as ortho-, pyro-, meta- and tripolyphosphates. Illustrative phosphate reagents are the alkali metal phosphates, such as sodium and potassium ortho-phosphate, phosphoric acid, phosphorus oxychloride, sodium and potassium tripolyphosphate, and sodium and potassium trimetaphosphate. The reagent may be a mono-, di- or trialkyl metal phosphate or combinations thereof. Sodium tripolyphosphate is particularly ("STP") useful.

Impregnation by the phosphate reagent may be accomplished by adding the reagent in an amount of less than 15% by weight of starch, preferably less than 10%. The phosphate reagent may be added in the dry state to wet starch granules, or by dissolving the reagent in water to form an aqueous solution which is then mixed with the starch granules. These impregnation techniques are described in U.S. Patent Nos. 4,166,173 and 4,216,310.

Any oligosaccharide may be suitable for use herein and may be derived from any native source such as those listed above, The source may be the same as or different from that of the starch component. As defined herein, oligosaccharide contains from one to twenty sugar units joined by glycosidic bonds. Oligosaccharide is intended to include monosaccharides, disaccharides, oligosaccharides, maize syrup solids, and malto dextrins. Oligosaccharide suitable for the present invention include, but are not limited to, debranched starches, maize syrup solids, dextrose, fructose, maltose, particularly maize syrup solids with a DE of from 20 to 40. Although oligosaccharide is intended to include monosaccharides, these generally add color and/or flavor that may be undesirable in many industrial applications. Therefore, particularly suitable oligosaccharides for the present invention are those which contain at least two sugar units joined by glycosidic bonds.

Addition of the oligosaccharide to the starch may be achieved by adding the oligosaccharide dry or as an aqueous solution. In particular, the oligosaccharide may be added to an agitated starch slurry, or starch may be added to a stirred, aqueous solution of the oligosaccharide, In addition, an aqueous solution of the oligosaccharide may be sprayed onto dry or wet starch granules.

The starch, impregnated with phosphate and optionally with oligosaccharides, is then subjected to a fluidized state and heat-treated to effect the phosphorylation. Though the heat treatment may be carried out in one step, it is preferably carried out in two steps. First, the impregnated starch is subjected to the fluidized state and dried at less than 140 °C, preferably between 60 °C and 140 °C, and most preferably between 100 and 125 °C, to virtually anhydrous conditions, preferably less than 1% moisture content by weight of starch. Secondly, while still in the fluidized state, the dried product is heated to between 100 and 185 °C, preferably between 120 and 140 °C for 30 to 300 minutes. At temperatures higher than about 150 °C, the processing time is preferably less than 45 minutes.

The fluidized state is achieved by vigorous mixing of the solid starch particles in vacuum or in a gas whereby a uniform distribution of starch throughout the vacuum or gas may be attained. Vigorous mixing may be accomplished by using air or gas, at or above atmospheric pressures in a fluidized bed reactor or by sufficient mechanical agitation. Where pressurized gas is used to effect the fluidized state, the velocity of the gas must achieve a minimum rate such that the particles are free to move and exhibit a "fluidized state." The fluidized state results in very efficient heat transfer and allows the starch to rapidly dry to a virtually anhydrous state at low temperature.

Suitable starches also useful in the present invention include cold temperature stable starches that are known to be inherently low temperature solution stable, or starches that are genetically modified to favor the low temperature, solution stability phenotype. Such starches include, without limitation, waxy maize starches having at least one recessive *sugary-2* allele. An example of such a starch includes waxy maize starch derived from a plant having endosperm tissue which is heterozygous, with either one or two doses, for the recessive *sugary-2* allele, described further in U.S. Patent No. 5,954,883. Another example includes starch derived from a waxy maize plant of a wxsu2 (homozygous) genotype and translocations, inversions, mutants and variants thereof, discussed in U.S. Patent No. 4,428,972.

Physically modified starches derived from the foregoing suitable starches may also be suitable for use herein, including pregelatinized and converted starches. Pre-gelatinization techniques include drum drying and spray drying, including spray drying using the methods described in U.S. Patent Nos. 4,280,851; 4,600,480; 5,131,953; and 5,149,799, and alcohol treatments as described in U.S. Patent No. 4,465,702. Conversion (degradation) products derived from any of the starches, including fluidity or thin-boiling starches prepared by oxidation, enzyme conversion, acid hydrolysis, heat and or acid dextrinization, and/or sheared products may also be useful herein.

Any starch having suitable properties for use herein may optionally be purified by any method known in the art to remove starch off flavors (also known as "off-notes") and colors that are native to the starch or created during starch modification processes. Suitable purification processes for treating the instant starches are disclosed in European Patent Application No. 93101520.0 (Publication No. 0 554 818) to Eden *et al*. Alkali washing techniques, for starches intended for use in either granular or pregelatinized form, are also useful and described in U.S. Patent Nos. 4,477,480 to Seidel and 5,187,272 to Bertalan *et al*. Purification by the starches by extraction with a fluid in the supercritical or liquid phase is also useful and described in U.S. Serial No. 60/317,572, filed September 6, 2001.

Generally, suitable starches are used to prepare stabilizing syrups. These syrups are subsequently blended with a milk solids solution. As stated above the invention is directed to a process for preparing stabilizing syrup comprises mixing sugar, starch and water and cooking the mixture to give a fully dispersed mixture. As defined herein, a fully dispersed mixture indicates a mixture in which no starch granules are left intact.

Useful cooking techniques may include, without limitation, low temperature and long time processes ("LTLT"), high temperature and short time ("HTST") processes, and ultra high temperature processes ("UHT"). LTLT pasteurization takes place at a minimum of about 63 °C for about 30 minutes, allowing starch hydration and cooking. Higher temperature processing covers a wide range of conditions and are described more fully in U.S. Patent No. 6,247,507. Generally, HTST involves pasteurization at a minimum temperature of about 72 °C for about 15 seconds. Under UHT conditions, the product must typically reach a minimum temperature of about 138 °C for a minimum of about two seconds, more particularly from about 4 to about 6 seconds.

Cooking may be achieved by a variety of methods known in the art including, without limitation, tubular heat exchange, plate heat exchange, etc. A particularly useful cooking technique is via HTST pasteurization conducted, for example, in a tubular or plate heat exchanger at about 115 °C for about 3 seconds, or under such conditions that a fully dispersed syrup is obtained.

The resultant stabilizing syrup is then optionally stored or used directly for preparing acidified milk beverages. Preparation involves mixing the stabilizing syrup under low shear (mechanical stirring). The syrup is mixed in a ratio of 10 to 60 percent by weight with 0 to 3.5 % fat and 9 to 17 % milk solids product, which has been fermented to a pH of 3.9 to 4.6, and homogenized according to techniques known in the art. The ratio of stabilizing syrup to the fermented milk product solution can be adjusted according to processing limitations and the desired characteristics of the acidified milk product. The resultant acidified milk beverage may be further subjected to heat treatment in order to extend storage life. Flavoring, coloring and other ingredients characteristic of traditional acidified milk beverages may optionally be added to the acidified milk beverage of the present invention.

As used herein, the term "acidified milk beverage" is defined as a beverage having a total solids content of less than 20%, a pH of between 3.9 to 4.6, and a Brookfield viscosity measured at 50 RPM and 4°C of less than 400 mPas (cP). More particularly, the beverage has a viscosity of less than 300 mPas (cP). Even more particularly, the beverage has a viscosity of between 100 mPas (cP) and 200 mPas (cP).

The starches of the method of the present invention may be used to replace substantially all the gum traditionally used to stabilize acidified milk beverages. In order to adequately stabilize acidified milk beverages, typically about 0.3% by weight gum is used. Accordingly, the acidified milk beverages of the present invention contain less than 0.15% by weight gum, particularly less than 0.1% by weight gum, and more particularly less than 0.05% by weight gum of the beverage.

In addition to stabilizing acidified milk beverages, certain starches of the method of the present invention may desirably retain certain organoleptic and structural properties of the acidified milk beverages, particularly viscosity stability, mouthfeel and taste. For example, the acidified milk beverages obtained by the method of the present invention containing hydroxypropylated waxy corn starch substantially retain their viscosity stability, mouthfeel and flavor in comparison to a corresponding beverage containing 0.3% w/w of an industry standard pectin stabilizer.

The following examples will more fully illustrate the embodiments of this invention. In the examples, all parts and percentages are by weight and all temperatures in degrees Celsius unless otherwise noted.

### EXAMPLES

### Procedures

### Measurement of Viscosity Stability

The viscosity of the acidified milk beverages was measured with a Brookfield LV/DV-III viscometer equipped with a small sample adapter and a computer loaded with Brookfield's Rheocalc software (Brookfield Rheocalc for Windows - Brookfield Engineering Laboratories, Inc., Stoughton, Massachusetts). One ounce samples of the beverages stored at 4°C were inverted once and then poured into the Brookfield Thermocel accessory (both accessory and a SC4-31 spindle were pre-chilled in ice). A 50-250 RPM scan was then conducted on the samples over approximately 2.5 minutes.

### Measurement of Beverage Stability (also known as "Wheying-off")

Digital photos were taken of each acidified milk beverage after 1, 7 and 14 days of storage at 4°C. The images were then analyzed using Sigma Scan Pro V 4.0 image analysis software by manual definition (tracing with the mouse) of the clear liquid region (or liquid separated from solids). A "trace measurement" was then run for total area, thereby defining the

## Claims

1. A method of preparing a stabilizing syrup for use in acidified milk beverages comprising the steps of:
mixing starch, sugar and water components together,
cooking the mixed components to give a dispersed stabilizing syrup, and
blending the stabilizing syrup with milk product solids.

2. The method of preparing a stabilizing syrup according to claim 1 further comprising the step of blending the stabilizing syrup with milk product solids under low shear.

3. The method of preparing a stabilizing syrup according to claim 1 further comprising the step of cooking the mixed components under a high temperature and short time process.

4. The method of preparing a stabilizing syrup according to claim 1 further comprising the step of blending the stabilizing syrup with milk product solids in a ratio of 10 to 60 percent by weight with about 0 to 3.5% fat and 9 to 17% milk solids product.

## Patentansprüche

1. Verfahren zur Herstellung eines stabilisierenden Sirups zur Verwendung in angesäuerten Milchgetränken umfassend die Schritte:
Zusammenmischen von Stärke, Zucker und Wasserkomponenten,
Kochen der gemischten Komponenten zu einem dispersen stabilisierenden Sirup, und
Mischen des stabilisierenden Sirups mit Milchproduktfeststoffen.

2. Verfahren zur Herstellung eines stabilisierenden Sirups gemäß Anspruch 1 zusätzlich umfassend den Schritt des Mischens des stabilisierenden Sirups mit Milchproduktfeststoffen unter niedriger Scherbeanspruchung.

3. Verfahren zur Herstellung eines stabilisierenden Sirups gemäß Anspruch 1 zusätzlich umfassend den Schritt des Kochens der gemischten Komponenten durch Kurzzeithocherhitzung.

4. Verfahren zur Herstellung eines stabilisierenden Sirups gemäß Anspruch 1 zusätzlich umfassend den Schritt des Mischens des stabilisierenden Sirups mit Milchproduktfeststoffen in einem Verhältnis von 10 bis 60 Gewichtsprozent mit etwa 0 bis 3,5 % Fett und 9 bis 17 % Milchproduktfeststoffen.

## Revendications

1. Procédé pour la préparation d'un sirop stabilisant destiné à être utilisé dans des boissons à base de lait acidifié, comprenant les étapes consistant à :
mélanger ensemble les constituants amidon, sucre et eau,
faire cuire les constituants mélangés pour obtenir un sirop stabilisant dispersé, et
mélanger le sirop stabilisant à un produit laitier sec.

2. Procédé pour la préparation d'un sirop stabilisant suivant la revendication 1, comprenant en outre l'étape consistant à mélanger le sirop stabilisant à un produit laitier sec dans des conditions de faible cisaillement.

3. Procédé pour la préparation d'un sirop stabilisant suivant la revendication 1, comprenant en outre l'étape consistant à faire cuire les constituants mélangés dans un procédé bref à haute température.

4. Procédé pour la préparation d'un sirop stabilisant suivant la revendication 1, comprenant en outre l'étape consistant à mélanger le sirop stabilisant à un produit laitier sec en un rapport de 10 à 60 % en poids, avec environ 0 à 3,5 % de matière grasse et 9 à 17 % de produit laitier sec.
